# EUROPÄISCHE PATENTSCHRIFT

(11) **EP 0 970 132 B1**
(45) Veröffentlichungstag und Bekanntmachung des Hinweises auf die Patenterteilung: **18.06.2003**
(21) Anmeldenummer: 99900429.4
(22) Anmeldetag: 22.01.1999
(51) Int. Cl.: C08F 10/00, C08F 4/00, C08F 2/34, C08G 61/08, B01J 19/08, B01J 12/00

(54) **KATALYTISCH BESCHLEUNIGTE GASPHASENREAKTIONEN**
CATALYTICALLY ACCELERATED GASEOUS PHASE REACTIONS
REACTIONS EN PHASE GAZEUSE ACCELEREES PAR VOIE CATALYTIQUE

(30) Priorität: 23.01.1998 CH 16298
(43) Veröffentlichungstag der Anmeldung: 12.01.2000
(73) Patentinhaber: Chen, Peter, 8092 Zürich (CH)
(72) Erfinder: CHEN, Peter, CH-8092 Zürich (CH); PLATTNER, Dietmar, A., CH-8045 Zürich (CH); HINDERLING, Christian, CH-8006 Zürich (CH); FEICHTINGER, Derek, CH-8128 Hinteregg (CH); ADLHARD, Christian, CH-8001 Zürich (CH)
(74) Vertreter: Troesch Scheidegger Werner AG
(86) Internationale Anmeldenummer: CH9900029
(87) Internationale Veröffentlichungsnummer: WO99037692

(56) Entgegenhaltungen:
- EP-A- 0 277 003
- DE-A- 2 835 625
- US-A- 4 212 719
- US-A- 4 835 230
- EHRLICH D J ET AL: "UV LASER PHOTODEPOSTION OF PATTERNED CATALYST FILMS FROM ADSORBATE MIXTURES" APPLIED PHYSICS LETTERS, Bd. 46, Nr. 2, 15. Januar 1985, Seiten 198-200, XP000706377

## Beschreibung

Die vorliegende Erfindung betrifft ein Verfahren zur Durchführung einer kationisch katalytisch beschleunigten Gasphasenreaktion, ein Verfahren zur Durchführung einer katalytisch beschleunigten Gasphasenpolymerisation sowie eine Verwendung des Verfahrens.

Bei anionisch oder kationisch katalytisch beschleunigten Gasphasenreaktionen oder in einem Reaktor mit nasser Suspension werden die Katalysatoren in der Regel auf Trägersubstanzen angeordnet und dadurch beigefügt.

Im Falle von auf Trägersubstanzen angeordneten Katalysatoren für die Durchführung einer sogenannten heterogenen Katalyse wird der Träger samt Katalysator mittels einer Wirbelschicht im gasförmigen Reaktionsgemisch gehalten. Insbesondere bei Polymerisation in Gasphase, wie beispielsweise der Herstellung von Polyolefinen, werden derartige, auf Trägersubstanzen angeordnete Katalysatoren verwendet, wobei neuerdings sogenannte Metallocen-basierende Katalysatoren verwendet werden, welche unter anderem auf Silicagel oder Magnesiumchlorid als Trägerpartikel angeordnet werden. Der grosse Vorteil dieser auf Metallocen-Verbindungen basierenden Katalysatoren liegt darin, dass selektive bzw. gesteuerte Reaktionsabläufe ermöglicht werden und somit die Herstellung von Polymeren ermöglicht wird, mit gegenüber den heute gebräuchlichen Polymeren wesentlich verbesserten Eigenschaften, insbesondere in bezug auf Elastizität, Wärmeformbestätigkeit, Härte etc.

Die Herstellung derartiger, beispielsweise auf Metallocen-Verbindungen basierenden Katalysatoren ist aber nach wie vor sehr teuer und kompliziert, muss doch zunächst die den Katalysator bildende Substanz auf dem Trägermaterial abgelagert werden und anschliessend aktiviert werden, beispielsweise mittels Alkylierungsmitteln oder mit sogenannten Lewis-Säuren. Damit wird aber auch die Herstellung der entsprechenden Polymere, wie beispielsweise der Polyolefine, basierend auf derartigen Metallocen-Katalysatoren, sehr teuer.

Bei der Verwendung von in Lösungsmitteln gelösten ionischen Katalysatoren besteht das Problem, dass in der Regel durch die Anwesenheit des Lösungsmittels und die Gegenionen die Reaktionsgeschwindigkeit negativ beeinflusst werden muss. Zudem kann das Lösungsmittel partiell mit dem Katalysator reagieren bzw. durch Anlagerung am aktiven Anion oder Kation Komplexe bilden, wodurch die Aktivität des Katalysators reduziert wird. Ausserdem vernichtet das Lösungsmittel eine günstige elektrostatische Wechselwirkung, die in der Gasphase besteht. In der Regel handelt es sich bei diesen Katalysatoren um sogenannte Ziegler-Natta-Katalysatoren bzw. um Katalysatoren, geeignet für die Durchführung von sogenannten Metathese-Prozessen.

Es ist daher eine Aufgabe der vorliegenden Erfindung, ein Verfahren zum Einbringen von anionischen oder kationischen Katalysatoren in ein Gasphasenreaktionsgemisch zur katalytischen Beschleunigung der Reaktion vorzuschlagen ohne die vorab beschriebenen Nachteile.

Erfindungsgemäss wird die gestellte Aufgabe mittels einem Verfahren gemäss dem Wortlaut insbesondere nach Anspruch 1 gelöst.

Vorgeschlagen wird, dass das aktive Kation, welches den Katalysator bildet, als freies Kation ohne entsprechendes Gegenion sowie mindestens weitgehendst frei von irgendwelchen Lösungsmitteln in das gasförmige Reaktionsgemisch eingebracht wird.

Gemäss einer Variante wird vorgeschlagen, dass die den Katalysator bildende Substanz zunächst in einem Lösungsmittel eingebracht bzw. gelöst aktiviert wird und anschliessend das Lösungsmittel sowie das Gegenion vor dem Einbringen in das gasförmige Reaktionsgemisch weitgehendst entfernt werden.

Das Einbringen eines Anions oder Kations ohne entsprechendes Gegenion und weitgehendst lösungsmittelfrei ist möglich, indem der Katalysator in das gasförmige Reaktionsgemisch mittels Elektrospray-Ionisation, Thermospray-Ionenverdampfung oder mit sogenannter Atmospheric Pressure Ionisation eingeführt wird.

Als Katalysatoren eignen sich insbesondere sogenannte Ziegler-Natta-Katalysatoren oder Metallocen-Katalysatoren, welche zunächst in einem geeigneten Lösungsmittel gelöst und aktiviert werden. Anschliessend erfolgt das Versprühen des so gelösten und aktivierten Katalysators mittels Elektrospray, Thermospray bzw. Ionenverdampfung oder mittels Atmosphärendruck-Ionisation, wobei in der Regel die Versprühung unter Hochdruck erfolgt, unter gleichzeitigem Einhüllen der Versprühwolke in ein inertes Gas, wie beispielsweise Stickstoff oder ein Edelgas. Durch Erwärmen sowie durch Anlegen eines Vakuums wird mindestens ein Teil des versprühten Lösungsmittels entfernt sowie das zum Katalysator entsprechende Gegenion mittels Anlegen eines elektrischen Potentials bzw. einer elektrischen Spannung. Das nun so isolierte Anion oder Kation, welches der Reaktion als Katalysator dient, wird anschliessend in einen Reaktionsraum eingeführt, in welchem das gasförmige Reaktionsgemisch bzw. das zu polymerisierende gasförmige Monomer angeordnet ist. Dabei ist es möglich, mehrere Reaktionsstufen bzw. -räume nacheinander anzuordnen, um insbesondere im Falle der Polymerisation sich nachfolgende, kettenbildende Polymerisationsreaktionen durchzuführen.

Durch diese relativ einfache Herstellung äusserst effizienter anionischer oder kationischer Katalysatoren (d.h. mit 10⁶ - 10⁷ mal höherer Reaktivität) für die katalytische Beschleunigung von Gasphasenreaktionen wird es beispielsweise möglich, die nach wie vor teuren, aber technisch hochstehenden Metallocenbasierenden Polyolefin-Herstellverfahren zu verbilligen, und zwar in einen Kostenbereich, der demjenigen von linearen Niederdruck-Polyethylen- und Polypropylen-Herstellprozessen entspricht. Die Herstellprozess-Kostendifferenz ergibt sich nun nicht mehr aus der Differenz der Herstellung der Katalysatoren, sondern lediglich weitgehendst aus der Differenz der Herstellung der Monomere.

Ähnlich günstige Resultate lassen sich generell bei mit Ziegler-Natta-Katalysatoren beschleunigten Gasphasenreaktionen sowie Ringöffnungs-Metathese-Polymerisationsreaktionen in Gasphase erzielen, bei welchen in der Regel kationische Katalysatoren verwendet werden. Mittels Elektrospray oder Ionenverdampfung des Katalysators kann die Polymerisation beispielsweise von Gasphase-Olefin-Monomer-Molekülen auf einfache Art und Weise induziert werden.

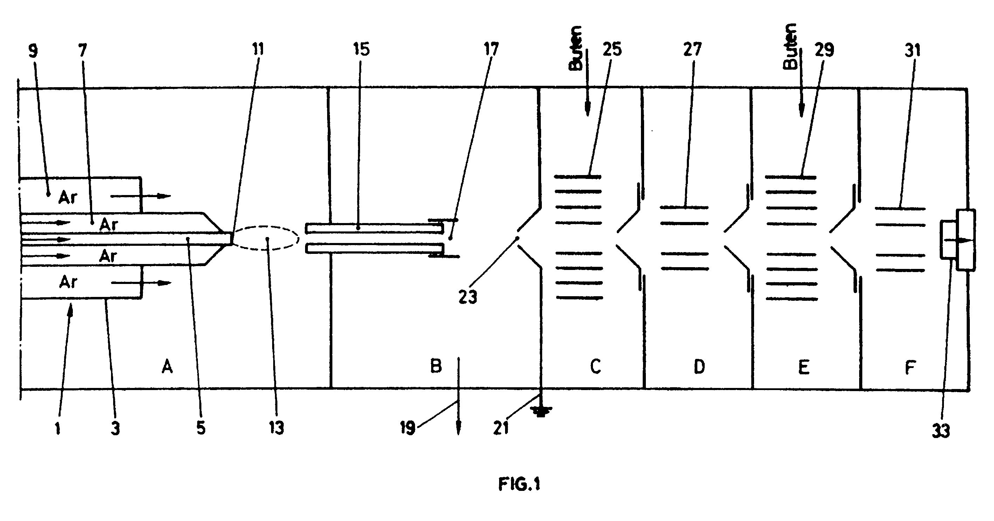

Die Erfindung wird nun nachfolgend unter Verwendung einer Reaktoranordnung gemäss Figur 1 und unter Bezug auf die nachfolgend angeführten Beispiele von Gasphasereaktionen näher erläutert.

Dabei zeigt Fig. 1 schematisch und vereinfacht eine Reaktionsanordnung, in welcher ein Katalysator mittels Elektrospray in ein gasförmiges Reaktionsgemisch eingeführt wird, zur Durchführung und Analyse einer katalytisch beschleunigten Gasphasenreaktion bzw. der mittels der Reaktion hergestellten Produkte.

Fig. 1 zeigt eine in der Regel in Massenspektrometern anzutreffende Elektrospray-Anordnung, wobei für die Durchführung der nachfolgend beschriebenen Experimente ein leicht modifiziertes Finnigan-MAT-TSQ7000-Elektrospray-Tandem-Massenspektrometer, mit einer Octopol-Quadrupol-Octopol-Quadrupol(O1/Q1/O2/Q2)-Anordnung ausgerüstet, verwendet wurde, ähnlich beschrieben von Armentrout et al. (Lit. 1) mit gerichteten Ionenstrahlen, allerdings mit einer Elektrospray- statt einer konventionellen Ionenquelle (siehe Lit. 2).

Die vereinfacht schematisch dargestellte Anordnung gemäss Fig. 1 weist zunächst eine Elektronenspray-Ionenquelle 1 auf, welche durch eine zylindrische Elektrode 3 gebildet wird. Über eine hypodermische Nadel bzw. ein feines Einlassrohr 5 wird das mit dem Katalysator beladene Lösungsmittel in einen ersten Bereich A eingeführt, wobei das versprühte Lösungsmittel mit Katalysator schematisch mittels einer Sprühwolke 13 dargestellt ist. Ummantelt ist diese hypodermische Nadel durch Einlassrohre 5 für ein Schutzgas, wie beispielsweise Stickstoff oder ein Edelgas, welches beim Versprühen mit dem Lösungsmittel eingenebelt wird.

Ebenfalls im Bereich der zylindrischen Elektrode wird ein Konditioniergas über Leitungen 9 in den ersten Bereich A eingeführt, um das versprühte Lösungsmittel, beinhaltend den aktivierten Katalysator, auf eine bestimmte Temperatur zu konditionieren.

Im Bereich der Ausgabedüse 11 der zylindrischen Elektrode 3 wird eine Spannung angelegt, in der Grössenordnung von 0 bis +8 kV bzw. in der Grössenordnung von 0 bis -8 kV. Im ersten Bereich A herrscht in etwa atmosphärischer Druck.

Aus dem Bereich A in einen nachfolgenden Bereich B wird der Katalysator-Elektrospray-Nebel durch eine erhitzte Kapillare 13 geführt, an deren Ende eine rohrförmige Linse 17 angeordnet ist, an welcher eine Spannung von ca. 0 bis +200 bzw. 0 bis -200 V angelegt wird. Über diese Rohrlinse 17 wird der Elektrospray-Nebel in einen nachfolgenden Bereich B ausgegeben, in welchem ein Vakuum angelegt wird, um verdampftes Lösungsmittel beispielsweise über eine Abscheidepumpe 19 abzusaugen. Durch Anordnen eines Abscheiders 21, welcher geerdet ist, wird zudem das Gegenion aufgefangen, so dass durch die im Abscheider angeordnete Durchlassöffnung 23 lediglich das für die katalytische Beschleunigung verantwortlich Anion bzw. Kation in einen ersten Reaktionsbereich C hindurch gelangen kann, in welchem eine erste Octopol-Anordnung 25 vorgesehen ist. In diesem ersten Octopol-Bereich wird das Inertgas bzw. Schutzgas oder Konditioniergas durch das Reaktionsgas verdrängt, so dass die katalytisch beschleunigte Gasphasenreaktion initiiert wird.

Anschliessend an den Bereich C folgt ein analytischer Bereich D, aufweisend eine für ein Massenspektrometer typische Quadrupol-Anordnung, für die Analyse des Reaktionsgemisches.

In einem erneut nachfolgenden Reaktionsbereich E, wiederum aufweisend eine Octopol-Anordnung 29, wird die Gasphasenreaktion fortgesetzt, beispielsweise, um Oligomere zu erzeugen.

Im abschliessend nachfolgenden, erneuten Analysebereich F, wiederum aufweisend eine Quadrupol-Anordnung 31, werden erneut die Reaktionsprodukte analysiert.

Am Ende der Reaktionsanordnung ist eine sogenannte Dinode sowie ein elektrischer Verstärker 33 angeordnet.

Entlang der Reaktionsanordnung ist es möglich, unterschiedliche Vakuumdrücke anzulegen, d.h., dass beispielsweise in den analytischen Quadrupol-Bereichen D und F ein wesentlich höheres Vakuum angelegt werden kann als in den Octopol-Bereichen C und E.

**Erstes Beispiel:** Gasphasen-Ziegler-Natta-Polymerisation mittels Alkyl-Zirconocen-Kationen in einem Elektrospray-Ionisations-Tandem-Massenspektrometer.

In diesem Beispiel geht es um die Addition von mehreren Olefineinheiten zu einem isolierten Alkyl-Zirconocen-Kation in der Gasphase. Die Addition von 1-Buten zu freien Kationen findet bei einer diffusionsgesteuerten Geschwindigkeitsrate statt, welche 10⁷ bis 10⁸ mal schneller ist als die entsprechende Lösemittelphase-Addition, bei welchen das Metallocen-Kation Teil von einem Ionenpaar ist, oft mit einem oder mehreren koordinierenden Liganden (z.B. Lösungsmittel). Die beobachtete Reaktion entspricht den mehrfach sich nachfolgenden Kettenreaktions-Schritten von einer Ziegler-Natta-Polymerisation (Lit. 3), welche bestens untersucht in Lösung mit ähnlichen homogenen Katalysatoren, vorab nie in Massenspektrometer-Studien von isolierten Ionen beobachtet worden ist. Da die grosstechnische Herstellung von Metallocen-basierten Polyolefinen vielfach in lösemittelfreien Gasphasereaktoren mit "homogenen" Katalysatoren, aufgebracht auf einem inerten, festen Trägermaterial, durchgeführt wird, kann die Reaktion in einem Tandem-Massenspektrometer als vernünftiges Modell für den industriellen Prozess betrachtet werden und kann deshalb geeignete analytische und mechanistische Möglichkeiten liefern.

Das Elektrospray-Ionisations-Tandem-Massenspektrometer (ESI-MS/MS)-Experiment (Lit. 4, 5) wurde in einem modifizierten Finnigan-MAT-TSQ7000-Massenspektrometer durchgeführt, wie unter Bezug auf Fig. 1 beschrieben. Lösungen des Tetra(perfluorophenyl)borat-Salzes vom Methyl-Zirconocen-Kation I, (Cp₂Zr-CH₃)⁺, geeignet für Elektrospray, wurden durch Behandeln einer 10⁻³ molaren Lösung von Cp₃Zr(CH₃)₂ in Acetonitril mit etwas weniger als einem Äquivalent von Dimethylanilinium-Tetra(perfluorophenyl)borat (Lit. 6) als Aktivierungssäure hergestellt, gefolgt von einer zehnfachen Verdünnung mit CH₂Cl₂.

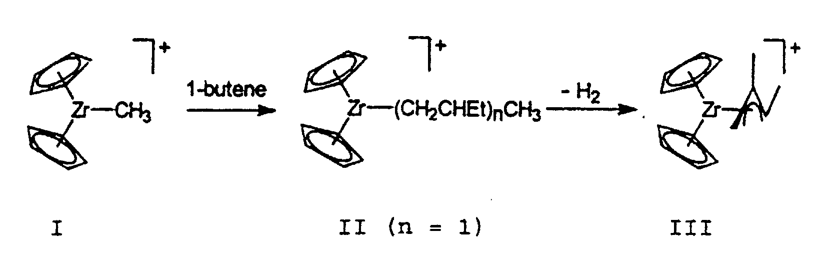

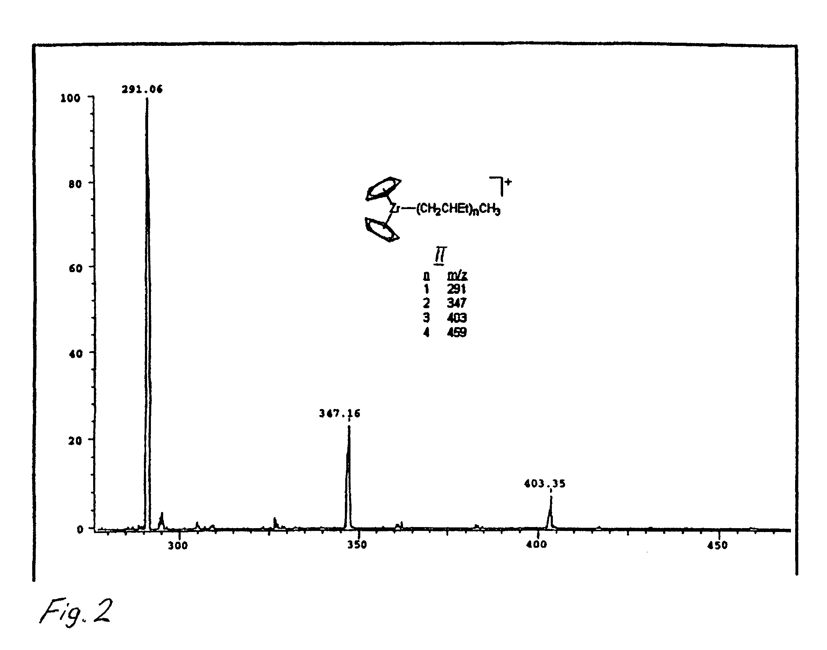

Die Lösungen wurden mittels der Elektrospray-Vorrichtung unter "hohem" Druck von 10 mTorr Argon (Der maximale Druck wurde von den Pumpen eingeschränkt. Höhere Drücke sollten die Reaktion verbessern.) versprüht, wobei Argon im ersten Octopolbereich als Konditionier- bzw. Thermalisationsgas diente. Die Verteilung und die Intensitäten der Ausschläge im Massenspektrum waren ausserordentlich sensitiv auf Spuren von Wasser, Sauerstoff und anderen Kontaminationen im Einlassystem zum Spektrometer. Jedoch konnte ein grosser Ausschlag entsprechend zu (I + CH₃CN) reproduzierbar beobachtet werden. Die Verwendung von 1-Buten anstelle von Argon im ersten Octopol-Bereich und die Erhöhung des Potentials der Kapillar-Rohrlinse, um Acetonitril-Liganden zu entfernen, führte zu der Ausbildung von neuen "Peaks", unter welchen diejenigen Massen entsprechend zu II (n = 1) und III am ausgeprägtesten waren. Das Addukt II (n = 1) ist das Produkt der Einschiebung einer Olefineinheit in die Zr-C-Bindung von I, währenddem III das Produkt darstellt, welches sich bildet durch H₂-Verlust von II. Die Massenselektion von II (n = 1) in der ersten Quadrupol-Anordnung und die Kollision mit mehr 1-Buten (10 mTorr, beinahe null Kollisionsenergie) im zweiten Octopol-Bereich ergaben das Tochter-Ionenmassenspektrum, dargestellt in Figur 2.

Zweifellos hat die Addition weiterer Olefineinheiten stattgefunden, mit II (n = 1-3) klar erkennbar und II (n = 4) nachweisbar, falls der Skalenmassstab zehnfach vergrössert wird.

Reaktion von I mit Isobutylen anstelle von 1-Buten im ersten Octopol-Bereich ergibt einen wesentlichen Peak infolge des Additionsproduktes mit keinem anschliessenden Verlust von H₂ und lediglich einen kleinen Peak entsprechend einem CH₄-Verlust (siehe nachfolgend).

Die vorliegenden Resultate bestätigen die erste Beobachtung einer Ziegler-Natta-Polymerisation, beschleunigt durch isolierte Metallocen-Katalysator-Moleküle in der Gasphase. Frühere Anstrengungen, um Polymerisations-Reaktion in ICR(Ion Cyclotrone Resonance)-Experimenten (Lit. 7) zu beobachten, hauptsächlich durch Richardson, Eyler und Mitarbeiter (Lit. 8), führten immer zu der Produktion von III. Für eine grosse Anzahl von α-Olefinen, untersucht durch Richardson und Eyler, eine analoge Verbindung zu III (oder ein davon hergeleitetes Produkt) war das einzig beobachtete Produkt der Reaktion von I mit Olefinen, enthaltend ein β-Wasserstoff. Allen allerdings ergab ein Produkt analog zu II (n = 1), jedoch keine Nachfolgeprodukte. Im Falle von α-Olefinen, welche kein β-Wasserstoff enhalten, wie beispielsweise Isobutylen und α-Methylstyrol, erwähnen Richardson und Eyler exklusive Umwandlung zu Produkten, welche erhalten werden durch den Verlust von CH₄. Isotopisch gekennzeichnete Versuche in den späteren Experimenten zeigten abschliessend, dass die CH₄-Verlustreaktion aus dem π-Komplex nachfolgt in Konkurrenz mit, wahrscheinlicher als nachfolgend, der Einfügung der Olefin-Einheiten in die Zr-C-Bindung. Die Wasserstoffverlust- sowie CH₄-Verlustprodukte, von welchen anzunehmen ist, dass sie π-Allylstrukturen aufweisen, sind katalytisch inaktiv in Ziegler-Natta-Polymerisation. Entsprechend konnte die Addition von mehr als einer Einheit eines Olefins nicht beobachtet werden.

Weder die Wasserstoffverlust- noch die CH₄-Verlustreaktionen konnten in Ziegler-Natta-Polymerisationsreaktionen in Lösung oder in der Gasphase bei atmosphärischem Druck beobachtet werden. Richardson und Eyler erklären die Differenz zwischen ihren Resultaten und den Kondensiert-Phasen-Resultaten durch ungenügende Konditionierung (Thermalisation) der Zwischenstufen-Ionen, wie z.B. bei II im sehr niedrigen Umgebungsdruck in einer ICR-Spektrometerzelle. Zudem sind die Verweilzeiten und, sehr wichtig, die Kollisionszeiten sehr lang und erreichen gelegentlich mehrere Sekunden. Die Exothermizität einer Einfügungsreaktion kann leicht abgeschätzt werden als die Differenz der Bindungsenergie zwischen einer C-C-Einfachbindung und der π-Komponente von einer C=C-Doppelbindung, welche 20 bis 25 kcal/mol erreicht (die Zr-C-Bindungsstärke hebt sich auf).

Entsprechend wird II als chemisch aktivierte Spezies gebildet, welche bei Ausbleiben von Kollision sich entropisch am günstigsten verhält, namentlich durch Dissoziation. Enthalpiebegünstigte Reaktionen, wie z.B. Additionsreaktionen, erfolgen mehrheitlich unter Hochdruck oder Kondensiert-Phasen-Bedingungen. Die vorliegenden Resultate mit der Reaktion von elektrogesprayten Ionen unter relativ Hochdruck-Konditionen entsprechen eher den Kondensiert-Phasen-Resultaten als denjenigen im ICR-Hochvakuum. Dieser Effekt ist auf die effizientere Thermalisierung bzw. Konditionierung in den Experimenten mit erhöhtem Druck zurückzuführen, wie auch auf die kürzeren Reaktionszeiten als Eigenschaft durch das gewählte spezielle Massenspektrums-Design. Im speziellen ergibt sich durch die vollständige Abwesenheit des Wasserstoff-Verlustes von II (n > 1), dass die erhöhten Zustandsdichten, verbunden mit wachsenden Alkyl-Seitenketten, die Wasserstoff-Verlustreaktion ausreichend hemmt, wodurch Kollisionsstabilisierung des Adduktes ermöglicht wird. Daraus kann geschlossen werden, dass die Resultate aus der verwendeten ESI-MS/MS-Technik direkt anwendbar sind auf Reaktionen unter bekannteren Bedingungen. Trotzdem sind die inhärente Flexibilität und die Stromspannung der Tandem-Massenspektrumsmessungen durch die vorliegende Reaktionsanordnung (Lit. 9) erhältlich.

Der eindrücklichste Unterschied zwischen den vorliegenden Gasphaseresultaten und der analogen Reaktion in Lösung ergibt sich durch die enorme Reaktionsgeschwindigkeits-Beschleunigung. Eine Kinetikstudie des Cp₂ZrCl₂/MAO-Systems in Lösemittelphase-Olefinpolymerisation ergab einen Wert kₚ = 168 - 1'670 M⁻¹ sec⁻¹ bei 70°C mit einer absoluten Obergrenze von kₚ ≤ 5000 M⁻¹ sec⁻¹ mit 75 - 100 % des verfügbaren Zirconiums, vorliegend in einer katalytisch aktiven Form (Lit. 20). Falls man lediglich die höchste Geschwindigkeitskonstante zweiter Ordnung annimmt und diese mittels der Konzentration von 1-Buten entsprechend zu einem Druck 10 mTorr im zweiten Octopolbereich multipliziert, erhält man eine Geschwindigkeitskonstante pseudoerster Ordnung von kₚ'∼2.5 x 10⁻³ sec⁻¹. Die l/e-Lebensdauer von einem Alkyl Zirconocen-Kation in bezug auf die Addition von einem Olefin ergäbe somit: τ = 1/kₚ'∼400 sec. In einer vorangehenden Arbeit wurde die Durchgangszeit im zweiten Octopolbereich bei ungefähr 10 µsec. ermittelt. Die Untersuchung der sich nachfolgenden Peakintensitäten von II (n = 1-4) in Fig. 2 ergibt jedoch, dass die beobachtete Lebensdauer ungefähr der Durchgangszeit entspricht, d.h. τ ∼ 10 µsec., was bedeutet, dass die Reaktion der isolierten Alkyl-Zirconocen-Kationen in der Gasphase bei Abwesenheit eines Lösungsmittels und eines Gegenions ungefähr 10⁷ bis 10⁸ mal schneller abläuft als die analoge Lösemittelphase. Dies deutet auf eine diffusionsgesteuerte Reaktion im Massenspektrometer hin.

Fig. 2 zeigt das Tochter-Ionenspektrum, aufgenommen mittels Elektrospray von [Cp₂Zr-CH₃]^{+ -}B(C₆F₅)₄, gelöst in CH₂Cl₂/CH₃CN, Thermalisierung und Reaktion in Octopol 1 mit 1-Buten, massenselektioniert von m/e = 291 im Quadrupol 1, weitere Reaktion mit weiterem 1-Buten in Octopol 2 unter Niedrigenergie, Mehrfach-Kollisionsbedingungen, und schliesslich Massenanalyse in Quadrupol 2. Ein kleiner peak bei m/e = 459 ist erkennbar, falls die Skala vergrössert wird. Die Addition von bis zu vier Einheiten von 1-Buten ist erkennbar, woraus sich klar ergibt, dass die Ziegler-Natta-Polymerisations-Reaktion im Massenspektrometer mit vollständig ungelösten Komplexen fortschreitet.

Obwohl zunächst überraschend, ist das Resultat aufgrund von zwei Gründen vernünftig:
(i) Abwesenheit eines Gegenions oder irgendeiner Ladungserzeugung selbst durch eines schwach koordinierenden Lösemittelmoleküls, und weiter durch das Fehlen eines Vorabgleichgewichtes, um die aktive Spezies zu bilden (Lit. 21), sollten die isolierten Kationen an sich reaktiver sein, und
(ii) die elektrostatische Interaktion (Lit. 22) entweder des Ionen-Dipols oder des Ionen-induzierten Dipols, welche in Lösung abgeschirmt wird, erniedrigt effizient die Aktivierungsenergie einer Bimolekular-Ionenmolekül-Reaktion um 10 bis 20 kcal/mol, verglichen mit derselben Reaktion in Lösung. Für eine Lösemittelphasereaktion mit Eₐ ∼ 10-12 kcal/mol (unter Berücksichtigung durch kₚ ∼ 10³M⁻¹sec⁻¹) sollte die entsprechende Gasphasen-Ionenmolekül-Reaktion diffusionsgesteuert sein. Falls diese Erklärung zutrifft, sollte die Geschwindikgeitsbeschleunigung auf irgendeine Gasphasen-katalytische Reaktion von ungelösten ionischen Katalysatoren ohne Gegenionen angewendet werden können. Weiter liegt die Vermutung nahe, dass die Hochdruckpolymerisation von einem α-Olefin (atmosphärischer Druck anstelle der verwendeten ungefähr 10 mTorr) mit einem elektrogesprayten Ziegler-Natta-Katalysator ein Produkt ergibt mit einer sehr engen Verteilung der Kettenlängen. Falls einmal die wachsende Kettenlänge lang genug ist, um sich selbst "zu lösen", kann die Geschwindigkeitsrate abnehmen, was zu einem selbstregulierenden Verhalten der weiteren Polymerisation führt.

Zusammenfassend kann somit festgehalten werden, dass zum ersten Mal Ziegler-Natta-Polymerisation eines einfachen Olefins mittels ungelösten Metallocen-Katalysator-Molekülen, ohne ein Gegenion, in Gasphase beobachtet werden konnte. Die Chemie nachfolgend des Einbaus einer Olefin-Einheit in die Metall-Kohlenstoff-Bindung entspricht der Kondensiert-Phasen- und Hochdruck-Gasphasen-Chemie, jedoch mit einer aussenordentlichen Geschwindigkeitserhöhung um einen Faktor 10⁶ bis 10⁷, welche bei grosstechnischen Herstellverfahren von stereogleichmässigen high-performance Polyolefinen verwendet wird.

**Beispiel 2:** Olefin-Metathese- und Ringöffnungs-Metathese-Polymerisation mittels einem elektrogesprayten Ruthenium-Carbenkomplex in der Gasphase.

Eine Olefin-Metathesereaktion (Lit. 10) und eine Ringöffnungs-Metathese-Polymerisation in der Gasphase mittels dem wasserlöslichen Grubbs- (Lit. 11) Ruthenium-Benzyliden-Komplex IV konnte massenspektrometrisch beobachtet werden. Neben einer ersten Beobachtung einer Olefin-Metathese in Gasphase mittels einem Komplex, welcher dieselbe Reaktion in Lösung ergibt, liefert die vorliegende massenspektrometrische Studie überraschenderweise die Gewissheit, dass Gasphasenreaktionen von einem RuCL₂ (=CHPh) (PR₂R')₂-Komplex weitgehendst analog verläuft zur entsprechenden Reaktionen in Lösung in jeglicher Hinsicht, ausser einer ausserordentlichen Geschwindigkeitserhöhung um einen Faktor > 10⁶.

Die Elektrospray-Ionisation- (Lit. 4, 5) Tandem-massenspektrometrischen (ESI-MS/MS) Experimente wurden in einem modifizierten Finnigan MAT TSQ-7000-Massenspektrometer, wie unter Bezug auf Figur 1 beschrieben, durchgeführt. Komplex IV wurde synthetisiert wie beschrieben durch Mohr, Lynn und Grubbs (Lit. 11). Eine 10⁻⁵-molare CH₂Cl₂-Lösung des Diodid-Salzes von IV wurde anschliessend mit dem Olefin (1-Buten, Norbornen oder Cyclobuten) (Lit. 12) bei ungefähr 10 mTorr elektrogesprayt, wobei das Olefin im ersten Octopolbereich als Konditionier- bzw. Thermalisationsgas diente. Bei relativ milden Dessolvatisations-Bedingungen, wie beispielsweise einem Kapillarrohr-Linsenpotential von 44 V, bestand das Massenspektrum aus dem Dikation IV, einem Monikation V, entsprechend dem Verlust eines Phosphin-Liganden von IV, und einem zweiten Monokation VI mit einer Masse, welche angibt, dass einer der Chloridliganden in V durch ein Iodid ersetzt worden ist.

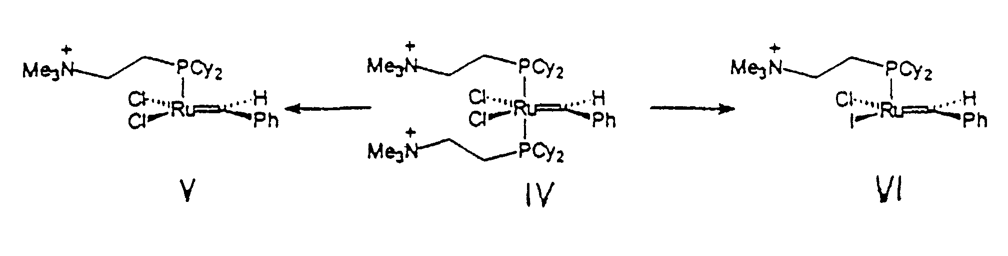

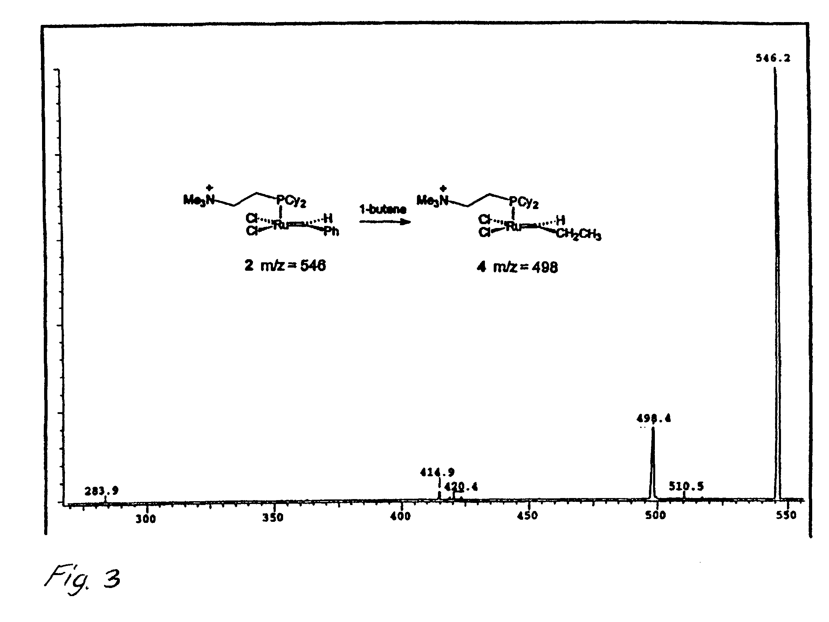

Die Verwendung des Dichloridsalzes von IV anstelle des Diodids eliminierten VI. Das Kapillarrohr-Linsenpotential wurde auf 150 V erhöht, so dass zunächst IV und anschliessend V verschwanden, und ein neuer "Peak" stellte sich ein, dessen Masse dem Olefin entspricht. Im Falle von 1-Buten als Olefin entsprach die neue Masse dem Ruthenium-Propyliden-Komplex VII, welcher aus einer Olefin-Metathese mit Reaktion mit dem Verlust von Styrol resultiert. Die Komplexe IV und VI lagerten keine Olefine in vergleichbaren Experimenten an. Im weiteren, wenn sowohl IV oder V im ersten Quadrupolbereich massenselektioniert wurden und anschliessend im zweiten Octopolbereich mit 1-Buten reagierten, war das einzige Metathese-Produkt in beiden Fällen VII (siehe Fig. 3; Fig. 3 zeigt ein Tochter-Ionenspektren, aufgenommen durch Elektrospray von IV in CH₂Cl₂-Lösung, desolvatisiert, Kollisionsentfernung eines Phosphinliganden und Thermalisierung in Octopol 1, Massenselektion von m/z = 546 in Quadrupol 1, gefolgt von Reaktion mit 1-Buten in Octopol 2 und schlussendliche Massenanalyse in Quadrupol 2).

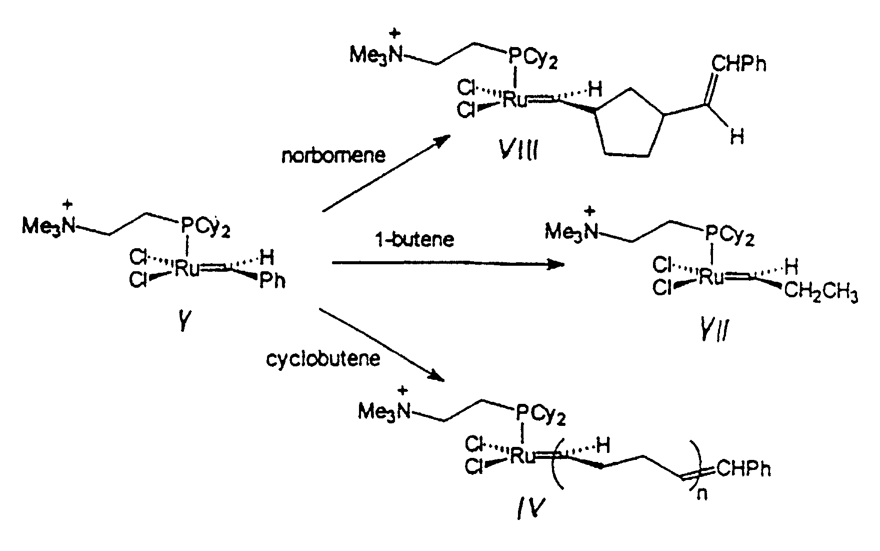

Mit Norbornen wies der neue Komplex VIII die Masse eines Adduktes von V und Norbornen auf, wie man erwarten würde für das Produkt einer Einstufen-Ringöffnungsmetathese-Polymerisations-Reaktion (ROMP). Massenselektion von VIII und Kollision im zweiten Octopol-Bereich mit entweder Argon oder Norbornen führte zum Verlust der Norbornen-Masse vom Ion und vermutlich zur Reformation von V.

Mit dem reaktiveren Cyclobuten im ersten Octopol-Bereich während der Herstellung von V tritt nachweislich ein Addukt IX (n = 1) im Massenspektrum auf. Eine genauere Untersuchung des Massenspektrums lässt einen kleineren Massenpeak erkennen für IX (n = 2), was darauf schliessen lässt, dass ein zweites Molekül von Cyclobuten eingefügt worden ist.

Verschiedene reaktionsmechanistische Standpunkte können aus den Daten hergeleitet werden, sogar ohne Vorliegen der genaueren thermochemischen Messungen (via Kollisions-induzierten Reaktionsübergängen (Lit.13), welche mit den vorliegenden Instrumenten möglich sind) (Lit. 14).

Elektrospray-Ionisation von mittleren bis grossen organo-metallischen Komplexen wurde erst kürzlich beschrieben (Lit. 15), wurde aber nicht systematisch (Lit. 16) mit der grossen Anzahl von Ionenmolekül-Reaktionstechniken verbunden, welche im Zusammenhang mit kleinen Gasphasen-organo-metallischen Ionen (Lit. 17) erhältlich sind. Andere Arbeiten in der Ionenmolekül-Chemie haben Olefin-Metathesereaktionen beobachtet, im speziellen mit verschiedenen einfachen Metallkarbenen (Lit. 18), wie beispielsweise [Mn=CH₂]⁺, [Fe=CH₂]⁺ und [Co=CH₂]⁺, meistens durch Reaktion mit deuteriertem Ethylen. Die vorliegenden Resultate bestätigen allerdings das erste Beispiel, in welchem gezeigt wurde, dass ein Lösemittelphasen-Olefin-Metathese-Katalysator dieselbe Reaktion in der Gasphase auslöst. Kritisch in bezug auf die Signifikanz des Experiments ist die Tatsache, dass sich die Gasphase- und die Lösemittelphase-Reaktionen sehr ähnlich sind. Die erhaltenen Reaktionsmechanismen zeigen, dass viele Merkmale, welche bei Lösemittelphasen-Metathese-Reaktionen auftreten, ebenfalls in Gasphasereaktionen auftreten (mindestens tendentiell). Die Dissoziation von einem Phosphin-Liganden vom formellen 18-e⁻-Komplex IV scheint notwendig zu sein, bevor die Metathese-Reaktion auftreten kann, als Beweis durch die Anwesenheit von Produkten, wie VII und der totalen Abwesenheit von Metathese-Produkten, enthaltend zwei der Phosphin-Liganden. Qualitativ ist Norbornen reaktiver mit V im Massenspektrometer als 1-Buten, wiederum wie zu erwarten. Mit Cyclo-Olefinen ist die Addition der ersten Monomereinheit wesentlich einfacher als die nachfolgenden Additionen. Dies in Übereinstimmung mit den Beobachtungen von Grubbs (Lit. 19), dass die Ruthenium-Benzyliden-Komplexe in Lösemittelphase-Ringöffnungs-Metathesepolymerisations-Reaktionen wesentlich schnellere Anfangsreaktionen (ungefähr neunmal) zeigen als die nachfolgenden Geschwindigkeiten der Kettenbildung. Die Parallelität der Gasphase- und der Lösemittelphase-Reaktivität wird durch eine abschliessende Beobachtung unterstrichen. Das Produkt der Metathese von 1-Buten durch den Komplex V ist Ruthenium-Propyliden VIII, und nicht das alternative Ruthenium-Methylen. Innerhalb des Signal-zu-Rausch-Spektrums von 50:1 oder besser ist der andere mögliche Produkt-Karben-Komplex abwesend. Es ist anzunehmen, dass dadurch eine kinetische Präferenz in der Metathese-Reaktion dargestellt ist, was dadurch zu erklären ist, dass die Reaktion nicht unter Gleichgewichtsbedingungen durchgeführt wird. Genau dieselbe kinetische Präferenz wurde von Grubbs (Lit. 19) bei Lösemittelphasereaktion von RuCl₂(=CHPh)(Pcy₃)₂ mit 1-Buten erwähnt, wobei zuerst der Propylidenkomplex gebildet wird, bevor sich das Gleichgewicht zum thermodynamisch favorisierten Methylenkomplex einstellt.

Die absolute Reaktionsgeschwindigkeit bildet die Ausnahme zu den Ähnlichkeiten der Gasphase- und der Lösemittelphase-Reaktionen. Wie im Falle von Ziegler-Natta-Polymerisation bei ungelösten Metallocen-Kationen, werden die hier beschriebenen Olefin-Metathese- und Ringöffnungs-Metathese-Polymerisations-Reaktionen bis zu einem Faktor von ungefähr 10⁷ relativ zur Lösemittelphase-Geschwindigkeit in den Arbeiten von Grubbs (Lit. 19) beschleunigt. Der Effekt ergibt sich höchstwahrscheinlich infolge der Ionendipol- oder Ionen-induzierten Dipolwechselwirkung, welche allen Ionenmolekül-Reaktionen eigen ist, welche ungefähr 10 kcal/mol für die Überbrückung einer Aktivierungsbarriere für eine bimolekulare Reaktion (Lit. 23) liefern kann. Die Geschwindigkeitserhöhung ist nicht gross genug, damit alle Metathese-Reaktionen von V diffusionsgesteuert werden, da der Geschwindigkeits-Unterschied zwischen Addition von z.B. dem ersten Norbornen oder Cyclobuten und den nachfolgenden Additionen von jedem Olefin nach wie vor festzustellen ist.

In der Ringöffnungs-Metathese-Polymerisationsreaktion von V mit zwei Cycloolefinen könnte angenommen werden, dass die Komplexe mit Massen entsprechend zu sowohl VIII wie XI (n = 1) eher nur die π-Komplexe sein könnten als die Ringöffnungs-Metathese-Polymersationsprodukte. Die spontan reversible Bildung von VIII könnte als Beweis für eine derartige strukturelle Zuteilung interpretiert werden. Allerdings ergibt für Cyclobuten, dem reaktiveren der beiden Cycloolefine, die Beobachtung von IX (n = 2) definitiv, dass eine Einschiebung stattgefunden haben muss.

Als letzter Punkt ist zu erwähnen, dass währenddem Grubbs den "kationisierten" Trialkylphosphin-Liganden hergestellt hat, um die Wasserlöslichkeit herzustellen, für einen Metathese-Katalysator derselbe oder ähnliche Liganden verwendet werden können, lediglich um irgendwelche nichtgeladenen organometallischen Komplexe mit Phosphinliganden herzustellen, geeignet für Elektrospray-Anwendung in der Gasphase. Mit den weitverbreiteten Phosphinliganden in der organometallischen Chemie und dem weiten Bereich von Tandem-Massenspektrometrie-Techniken, entwickelt für die Untersuchung von Ionenmolekül-Reaktionen, ist die Bandbreite von möglichen Anwendungen enorm.

Abschliessend kann somit festgehalten werden, dass eine Olefin-Metathese mittels eines Ruthenium-Benzyliden-Komplexes massenspektrometrisch für elektroversprühte Ionen in Gasphase beobachtet werden konnte. Mehrere Merkmale der beobachteten Reaktion entsprechen den beobachteten Merkmalen für denselben Komplex in Lösung. Eine enorme Beschleunigung der Gasphase-Reaktion im Vergleich mit derjenigen, welche im Lösungsmittel stattfindet, kann jedoch beobachtet werden.

Durch die beiden angeführten Beispiele soll die vorliegende Erfindung selbstverständlich nicht auf die Verwendung von Metallocen-Katalysatoren für die Durchführung von Polymerisationsreaktionen bzw. auf Ziegler-Natta-Katalysatoren im Zusammenhang mit der Durchführung von Metathese- bzw. Metathese-Ringöffnungs-Polymerisations-Reaktionen beschränkt sein. Die beiden Beispiele dienen lediglich dazu, die vorliegende Erfindung näher zu erläutern und auch anhand von Vergleichen mit entsprechend auf Trägersubstanzen aufgebrachten Katalysatoren oder mit in Lösungen vorliegenden Katalysatoren die Analogie der Reaktionen darzulegen und somit zu beweisen, dass die erfindungsgemäss eingeführten kationischen Katalysatoren die entsprechenden Gas-Reaktionen katalytisch begünstigen. Untersuchungen der entsprechenden Reaktionsgeschwindigkeiten haben zudem gezeigt, dass gemäss dem vorliegenden erfinderischen Prinzip die entsprechenden Reaktionen bis zu 10⁷-fach beschleunigt werden können, verglichen mit den entsprechenden Reaktionen, durchgeführt mit auf Trägern aufgebrachten Katalysatoren oder mit in Lösungsmitteln vorliegenden Katalysatoren. Somit ist es erfindungsgemäss nicht nur wesentlich einfacher und billiger, den entsprechenden kationischen Katalysator vorzulegen bzw. in das Reaktionsgemisch einzuführen, sondern die Reaktion selbst wird auch wesentlich beschleunigt, was selbstverständlich ebenfalls kommerzielle Auswirkungen hat.

Weitere Reaktionen, welche erfindungsgemäss kationisch beschleunigt werden können, sind ebenfalls Additionsreaktionen von Olefinen, Hydrierungs- und Dehydrierungs-Reaktionen, sowie "normale" kationische oder anionische PolymerisationsReaktionen.

Ebenfalls geht es in den vorliegenden Beispielen lediglich darum, das Grundprinzip der Erfindung darzulegen und keinesfalls darum, optimale Prozessbedingungen darzulegen. Dies ist insofern nicht möglich, da die beiden Beispiele in Laboranlagen durchgeführt worden sind und lediglich die Bildung von Monomeren bzw. Oligomeren bei Polymerisationsreaktionen untersucht worden sind und somit der praktische Bezug auf entsprechende grosstechnische Herstellung fehlt. So sind insbesondere Parameter, wie anzulegendes elektrisches Potential, Wahl des Lösungsmittels, Wahl des inerten Gases, Wahl des Konditionierungsgases etc. etc., schlussendlich zu optimierende Parameter, welche einerseits von der durchzuführenden Reaktion und andererseits von der Dimensionierung der entsprechenden Anlage abhängen. Insbesondere vom Anlegen des Potentials, Wahl des Inertgases und der Konditionierung ist beispielsweise abhängig, ob das Lösungsmittel vollständig entfernt werden kann, oder ob beispielsweise Spuren des Lösungsmittels noch am Katalysator anhaften.

Erfindungswesentlich ist, dass das freie Kation, welches als Katalysator für die Beschleunigung der Gasphasenreaktion dient, ohne Gegenion und weitgehendst lösungsmittelfrei in das gasförmige Reaktionsgemisch eingeführt wird. Dies kann beispielsweise mittels Elektrospray, mittels Thermospray oder mittels Atmospheric pressure Ionisation erfolgen.
1. K.M. Ervin, P.B. Armentrout, *J. Chem. Phys*. 1985, *83*, 166.
2. Die Elektrospray-Quelle für massenspektrometrische Anwendungen wurde beschrieben: C.M. Whitehouse, R.N. Dreyer, M. Yamashita, J.B. Fenn, *Anal. Chem*. **1985,** *57*, 675.
3. A recent collection of reviews covers progress in the field. *Ziegler Catalysts, G.* Fink, R. Mülhaupt, H.H. Brintzinger, ed., Springer: New York, 1995.
4. The basic electrospray source for mass spectrometry is described by: C.M. Whitehouse, R.N. Dreyer, M. Yamashita, J.B. Fenn, *Anal. Chem*. **1985,** *57*, 675.
5. A complete monograph on the technique is: *Electrospray Ionization Mass Spectrometry*, R.D. Cole, ed., John Wiley: New York, 1997.
6. Generous donation of a sample of dimethylanilinium tetrakis(pentafluorophenyl)borate by Dr. Marc O. Kristen, BASF, is gratefully acknowledged.
7. J.S. Uppal, D.E. Johnson, R.H. Staley, *J. Am. Chem. Soc.* **1981,** *103*, 508.
8. C.S. Christ, J.R. Eyler, D.E. Richardson, *J. Am. Chem. Soc*. **1988,** *110*, 4038; C.S. Christ, J.R. Eyler, D.E. Richardson, *J. Am. Chem. Soc.* **1990,** *112*, 596; N.G. Alameddin, M.F. Ryan, J.R. Eyler, A.R. Siedle, D.E. Richardson, *Organometallics* **1995,** *14*, 5005.
9. For a recent monograph, see: *Organometallic Ion Chemistry*, Freiser, B. S., Ed.; Kluwer: Dordrecht, 1996.
10. The olefin metathesis reaction, first recognized as such by: N. Calderon, H.Y. Chen, K.W. Scott, *Tetrahedron Lett*. **1967,** 3327; is reviewed thoroughly in a recent monograph: *Olefin Metathesis and Metathesis Polymerization*, Ivin, K.J., Mol, J.C., Academic Press, New York, 1997.
11. B. Mohr, D.M.Lynn, R.H. Grubbs, *Organometallics* **1996,** *15*, 4317.
12. Cyclobutene was prepared by E2-elimination from cyclobutyl tosylate. The material was checked by ¹H nmr to ensure that there was none of the isomeric 1,3-butadiene.
13. L.F. Halle, P.B. Armentrout, J.L. Beauchamp, *Organometallics* **1982,** *1*, 963; P.B. Armentrout, L.F. Halle, J.L. Beauchamp, *J. Am. Chem. Soc*. **1981,** *103*, 6501; P.B. Armentrout, J.L. Beauchamp, *J. Am. Chem. Soc.* **1981,** *103, 784.* For some more recent work on small complexes, see: L.S. Sunderlin, D. Wang, R.R. Squires, *J. Am. Chem. Soc.* **1993,** *115*, 12060; L.S. Sunderlin, R.R. Squires, *J. Am. Chem. Soc*. **1993,** *115*, 337.
14. C. Hinderling, D.A. Plattner, P. Chen, *Angew. Chem.* **1997,** *109*, 272; C. Hinderling, D. Feichtinger, D.A. Plattner, P. Chen, *J. Am. Chem. Soc.* **1997,** *119*, 10793.
15. R. Colton, J.C. Traeger, *Inorg. Chim. Acta* **1992,** *201,* 153; A.J. Canty, P.R. Traill, R. Colton, I.M. Thomas, *Inorg. Chim. Acta* **1993,** *210*, 91; R. Colton, A. D'Agostino, J.C.
16. For a recent exception, see: T.G. Spence, T.D. Burns, L.A. Posey, *J. Phys. Chem. A* **1997,** *101*, 139.
17. For a recent monograph, see: *Organometallic Ion Chemistry*, Freiser, B. S., Ed.; Kluwer: Dordrecht, 1996. For other recent work, see, for example: M. Dieterle, J.N. Harvey, C. Heinemann, J. Schwarz, D. Schröder, H. Schwarz, *Chem. Phys. Lett*. **1997,** *277,* 399; G. Hornung, D. Schröder, H. Schwarz, *J. Am. Chem. Soc*. **1997,** *119*, 2273; R. Wesendrup, H. Schwarz, *Organomet*. **1997,** *16*, 461; G. Hornung, D. Schröder, H. Schwarz, *J. Am. Chem. Soc.* **1995,** *117*, 8192; D. Schröder, W. Zummack, H. Schwarz, *J. Am. Chem. Soc*. **1994,** *116*, 5857; K.K. Irikura, J.L. Beauchamp, *J. Phys. Chem.* **1991,** *95*, 8344; K.K. Irikura, J.L. Beauchamp, *J. Am. Chem. Soc*. **1991,** *113,* 2769; K.K. Irikura, J.L. Beauchamp, *J. Am. Chem. Soc.* **1989,** *111*, 75; P.B. Armentrout, *Acc. Chem. Res.* **1995,** *28*, 430; B.S. Freiser, *Acc. Chem. Res.* **1994,** *27,* 353.
18. A.E. Stevens, J.L. Beauchamp, *J. Am. Chem. Soc.* **1979**, *101*, 6449; D.B. Jacobson, B.S.
Freiser, *J. Am. Chem. Soc.* **1985,** *107*, 67; D.B. Jacobson, B.S. Freiser, *J. Am. Chem. Soc*. **1985,** 107, 2605.
19. P. Schwab, R.H. Grubbs, J.W. Ziller, *J. Am. Chem. Soc*. **1996,** *118,* 100.
20 . J.C.W. Chien, B.P. Wang, *J. Polym. Sci. Part A* **1990,** *28,* 15.
21. The importance of counter-ions, solvent effects, and ion-pairing has been discussed. M. Bochmann, S.J. Lancaster, *J. Organomet. Chem.* **1992,** *434*, Cl; M. Bochmann, S.J. Lancaster, *Angew. Chem. Int. Ed*. *Engl*. **1994,** *33*, 1634; S. Beck, M.H. Prosenc, H.H. Brintzinger, R. Goretski, N. Herfert, G. Fink, *J. Mol. Catalysis A* **1996,** *111*, 67.
22. W.E. Farneth, J.I. Brauman, *J. Am. Chem. Soc.* **1976,** *98*, 7891; W.N. Olmstead, J.I. Brauman, *J. Am. Chem. Soc*. **1977,** *99*, 4219; O.I. Asubiojo, J.I. Brauman, *J. Am. Chem. Soc*. **1979,** *101*, 3715; M.J. Pellerite, J.I. Brauman, *J. Am. Chem. Soc*. **1980,** *102*, 5993; S. Sharma, P. Kebarle, J. *Am. Chem. Soc*. **1982,** *104, 19;* G. Caldwell, T.F. Magnera, P. Kebarle, *J. Am. Chem. Soc.* **1984,** *106*, 959; T.B. McMahon, T. Heinis, G. Nicol, J.K. Hovey, P. Kebarle, *J. Am. Chem. Soc*. **1988,** *110*, 7591.
23. W.E. Farneth, J.I. Brauman, *J. Am. Chem. Soc*. **1976,** *98*, 7891; W.N. Olmstead, J.I. Brauman, *J. Am. Chem. Soc.* **1977,** *99*, 4219; O.I. Asubiojo, J.I. Brauman, *J. Am. Chem. Soc*. **1979,** *101*, 3715; M.J. Pellerite, J.I. Brauman, *J. Am. Chem. Soc*. **1980,** *102*, 5993; S. Sharma, P. Kebarle, *J. Am. Chem. Soc*. **1982,** *104,* 19; G. Caldwell, T.F. Magnera, P. Kebarle, *J. Am. Chem. Soc*. **1984,** *106*, 959; T.B. McMahon, T. Heinis, G. Nicol, J.K. Hovey, P. Kebarle, *J. Am. Chem. Soc*. **1988,** *110*, 7591.

## Patentansprüche

1. Verfahren zur Durchführung einer kationisch katalytisch beschleunigten Reaktion in Gasphase, **dadurch gekennzeichnet, dass** der Katalysator als freies Kation ohne entsprechendes Gegenion sowie mindestens weitgehendst lösungsmittelfrei in das gasförmige Reaktionsgemisch eingebracht wird.

2. Verfahren, insbesondere nach Anspruch 1, **dadurch gekennzeichnet, dass** der Katalysator in einem Lösungsmittel aktiviert wird und anschliessend das Lösungsmittel sowie das Gegenion vor dem Einbringen in das Reaktionsgemisch weitgehendst entfernt werden.

3. Verfahren, insbesondere nach. einem der Ansprüche 1 oder 2, **dadurch gekennzeichnet, dass** das Einbringen des Katalysators in das gasförmige Reaktionsgemisch mittels Elektrospray-Ionisation, Thermospray-Ionenverdampfung oder mittels Atmospheric pressure ionisation erfolgt.

4. Verfahren, insbesondere nach einem der Ansprüche 1 bis 3, **dadurch gekennzeichnet, dass** die den Katalysator bildende Substanz in einem Lösungsmittel eingeführt wird, anschliessend das Katalysator-Ion aktiviert wird und vor dem Einführen des Katalysator-Ions in das gasförmige Reaktionsgemisch das Lösungsmittel mittels Konditionierung, angelegtem Vakuum, durch Verdampfen sowie ggf. mittels Ausblasen entfernt wird, sowie das Gegenion durch Anlegen eines entsprechenden elektrischen Potentials.

5. Verfahren, insbesondere nach einem der Ansprüche 2 bis 4,
**dadurch gekennzeichnet, dass** zunächst das den aktivierten Katalysator enthaltende Lösungsmittel mittels einer Elektrospray-Vorrichtung versprüht wird, anschliessend durch Erwärmen, Ausblasen, Anlegen eines Vakuums sowie mittels eines erhöhten elektrischen Potentials bzw. durch Anlegen einer elektrischen Spannung sowohl das Lösungsmittel wie auch das Gegenion entfernt werden und der so isolierte Katalysator in Form freier Kationen in eine Reaktionskammer eingeführt wird, in welcher das gasförmige Reaktionsgemisch vorliegt, zum katalytischen Beschleunigen der Gasphasereaktion.

6. Verfahren, insbesondere nach Anspruch 5, **dadurch gekennzeichnet, dass** das Versprühen des den aktiven Katalysator enthaltenden Lösungsmittels mittels Elektrospray weitgehendst unter atmosphärischen Bedingungen erfolgt.

7. Verfahren, insbesondere nach einem der Ansprüche 5 oder 6, **dadurch gekennzeichnet, dass** mehrere nacheinander angeordnete Reaktionsbereiche bzw. Reaktionsstufen vorgesehen sind, für die Durchführung einer durch den Katalysator ausgelösten bzw. mit diesem beschleunigten Kettenreaktion bzw. Polymerisationsreaktion.

8. Verfahren, insbesondere nach einem der Ansprüche 1 bis 7, **dadurch gekennzeichnet, dass** als Katalysator ein Ziegler-Natta-Katalysator verwendet wird, wie vorzugsweise ein Metallocen-Katalysator.

9. Verfahren nach einem der Ansprüche 1 bis 8, **dadurch gekennzeichnet, dass** es sich bei der katalytisch zu beschleunigenden Gasphasenreaktion um eine Metathese-Reaktion, um eine Metathese-Ringöffnungs-Polymerisation oder um eine Gasphasen-Polymerisationsreaktion handelt.

10. Verwendung des Verfahrens nach einem der Ansprüche 1 bis 9 für die Herstellung eines Polyolefins.

## Claims

1. Process for performance of a cationic catalytically accelerated reaction in the gas phase, **characterised in that** the catalyst is introduced into the gaseous reaction mixture as a free cation without corresponding counterion and at least largely solvent-free.

2. Process in particular according to claim 1, **characterised in that** the catalyst is activated in a solvent and then the solvent and counterion are largely removed before introduction into the reaction mixture.

3. Process in particular according to one of claims 1 or 2, **characterised in that** the catalyst is introduced into the gaseous reaction mixture by means of electrospray ionisation, thermospray ion vaporisation or by means of atmospheric pressure ionisation.

4. Process in particular according to any of claims 1 to 3, **characterised in that** the substance forming the catalyst is introduced into a solvent, then the catalyst ion activated and before introduction of the catalyst ion into the gaseous reaction mixture, the solvent is removed by means of conditioning, applied vacuum, vaporisation and where applicable by means of blowing out, and the counterion removed by application of a corresponding electrical potential.

5. Process in particular according to claim any of claims 2 to 4, **characterised in that** first the solvent containing the activated catalyst is sprayed by means of an electrospray device and then both the solvent and counterion are removed by means of heating, blowing out, application of a vacuum and by means of an increased electrical potential or by application of an electrical voltage, and the catalyst thus isolated is introduced in the form of free cations into the reaction chamber in which the gaseous reaction mixture is present, for catalytic acceleration of the gas phase reaction.

6. Process in particular according to claim 5, **characterised in that** the solvent containing the active catalyst is sprayed by means of electrospraying largely under atmospheric conditions.

7. Process in particular according to one of claims 5 or 6, **characterised in that** several reaction areas or stages are provided in succession for the performance of a chain reaction or polymerisation reaction triggered or accelerated by the catalyst.

8. Process in particular according to one of claims 1 to 7, **characterised that** as the catalyst a Ziegler-Natta catalyst is used, preferably a Metallocen catalyst.

9. Process according to any of claims 1 to 8, **characterised in that** the gas phase reaction to be accelerated catalytically is a metathesis reaction, a metathesis ring opening polymerisation or a gas phase polymerisation reaction.

10. Use of the process according to any of claims 1 to 9 for the production of a polyolefin.

## Revendications

1. Procédé pour mettre en oeuvre une réaction en phase gazeuse accélérée par voie catalytique cationique, **caractérisé en ce que** le catalyseur est introduit dans le mélange réactionnel gazeux sous forme d'un cation libre, sans contre-ion correspondant, et au moins pratiquement sans solvant.

2. Procédé, en particulier selon la revendication 1, **caractérisé en ce que** le catalyseur subit une activation dans un solvant, le solvant et le contre-ion étant ensuite, avant introduction dans le mélange réactionnel, presque complètement éliminés.

3. Procédé, en particulier selon la revendication 1 ou 2, **caractérisé en ce que** l'introduction du catalyseur dans le mélange réactionnel gazeux a lieu par ionisation par électrospray, par évaporation ionique par thermospray, ou par ionisation sous la pression atmosphérique.

4. Procédé, en particulier selon l'une des revendications 1 à 3, **caractérisé en ce que** la substance formant le catalyseur est introduite dans un solvant, puis l'ion catalyseur est activé et, avant introduction de l'ion catalyseur dans le mélange réactionnel gazeux, le solvant est éliminé par conditionnement, application d'un vide, évaporation et éventuellement par dégazage, le contre-ion étant éliminé par application d'un potentiel électrique correspondant.

5. Procédé, en particulier selon l'une des revendications 2 à 4, **caractérisé en ce que** d'abord le solvant contenant le catalyseur activé est pulvérisé à l'aide d'un dispositif d'électrospray, puis, par chauffage, dégazage, application d'un vide, et à l'aide d'un potentiel électrique accrû ou par application d'une tension électrique, tant le solvant que le contre-ion sont éliminés, et le catalyseur ainsi isolé sous forme de cations libres, est introduit dans une chambre de réaction, dans laquelle se trouve le mélange réactionnel gazeux, pour permettre l'accélération catalytique de la réaction en phase gazeuse.

6. Procédé, en particulier selon la revendication 5, **caractérisé en ce que** la pulvérisation du solvant contenant le catalyseur actif est réalisée par électrospray, dans des conditions pratiquement atmosphériques.

7. Procédé, en particulier selon la revendication 5 ou 6, **caractérisé en ce qu'**on prévoit plusieurs zones ou étages de réaction, disposés les uns après les autres, pour la mise en oeuvre d'une réaction en chaîne ou d'une réaction de polymérisation déclenchée par le catalyseur ou accélérée par ce dernier.

8. Procédé, en particulier selon des revendications 1 à 7, **caractérisé en ce qu'**on utilise en tant que catalyseur un catalyseur de Ziegler-Natta, comme de préférence un catalyseur de type métallocène.

9. Procédé selon l'une des revendications 1 à 8, **caractérisé en ce que**, pour ce qui concerne la réaction en phase gazeuse devant être accélérée par voie catalytique, il s'agit d'une réaction métathèse, d'une polymérisation par ouverture de cycle métathèse, ou d'une réaction de polymérisation en phase gazeuse.

10. Utilisation du procédé selon l'une des revendications 1 à 9 pour préparer une polyoléfine.
